# EUROPEAN PATENT SPECIFICATION

(11) **EP 1 937 052 B1**
(45) Date of publication and mention of the grant of the patent: **14.08.2013**
(21) Application number: 06799846.8
(22) Date of filing: 05.10.2006
(51) Int. Cl.: A01B 73/04, A01B 63/16

(54) **AGRICULTURAL MACHINE WITH A CENTRE SECTION AND ON EITHER SIDE THEREOF FOLDING WING SECTIONS**
LANDWIRTSCHAFTLICHE MASCHINE MIT EINEM MITTELTEIL UND AUF JEDER SEITE DAVON KLAPPBAREN AUSLEGERN
MACHINE AGRICOLE AVEC UNE PARTIE CENTRALE ET DE CHAQUE CÔTÉ DE CELLE-CI DES SECTIONS PLIANTES

(30) Priority: 21.10.2005 SE 0502356
(43) Date of publication of application: 02.07.2008
(73) Proprietor: Väderstad-Verken Aktiebolag, 590 21Väderstad (SE)
(72) Inventor: INGEMARSSON, Marcus, S-312 91 Laholm (SE); DAHL, Jörgen, S-599 91 Ödeshög (SE); KARLSSON, Bo, S-585 97 Linköping (SE)
(74) Representative: Johansson, Lars E.
(86) International application number: PCT/SE2006/050386
(87) International publication number: WO 2007/046759

(56) References cited:
- EP-A1- 1 454 518
- WO-A1-2005/115124
- GB-A- 2 163 931
- GB-A- 2 248 164
- SE-C2- 525 931
- US-A- 4 479 549
- US-A- 4 509 602
- US-A- 4 658 911
- US-A- 5 303 779
- US-A- 5 921 325
- US-B1- 6 293 353

## Description

The present invention refers to an agricultural machine with a carrying framework, on which is arranged a centre section and on each side thereof folding wing sections are tumably attached, whereby said centre and wing sections are provided with implements, such as cultivator tines or some other soil tillage tools, and at their rear edges carry wheel aggregates, such as pack wheels, roller rings or the like, whereby control devices are arranged to raise and lower the wheel aggregates of said centre section in and for adaptation of the working depth of said implement. An agricultural machine according to the pre-characterising portion of claim 1 is disclosed in US 5,303,779.

One aim of the present invention is to produce an agricultural machine of the initially defined type, which through its simple construction saves on control devices and furthermore can decrease the width of the agricultural machine for transport on public roads.

The aim of the invention is achieved by a machine that has been given the characteristics described in Claim 1.

Preferred embodiments of the invention have been given the characteristics described in the subclaims.

The present invention is especially suitable for cultivator tines and similar tools, which must be given a predetermined working depth and which in the lowered position are distributed along the entire machine framework, i.e. both the centre section and the wing sections.

The invention is described more closely in the following with the help of the attached drawings, which show preferred embodiments.
Fig. 1 is a partial perspective view from above of a first embodiment of an agricultural machine according to the invention in a working position.
Fig. 2 is a perspective view similar to that in Fig. 1 of the machine according to the invention in a transport position.
Fig. 3 shows a partial side view of an embodiment of a machine not according to the invention.

Corresponding details in the embodiments described below and shown in the drawings have been given the same reference number. By the expressions 'fore' and 'rear' below is meant the position in the driving direction.

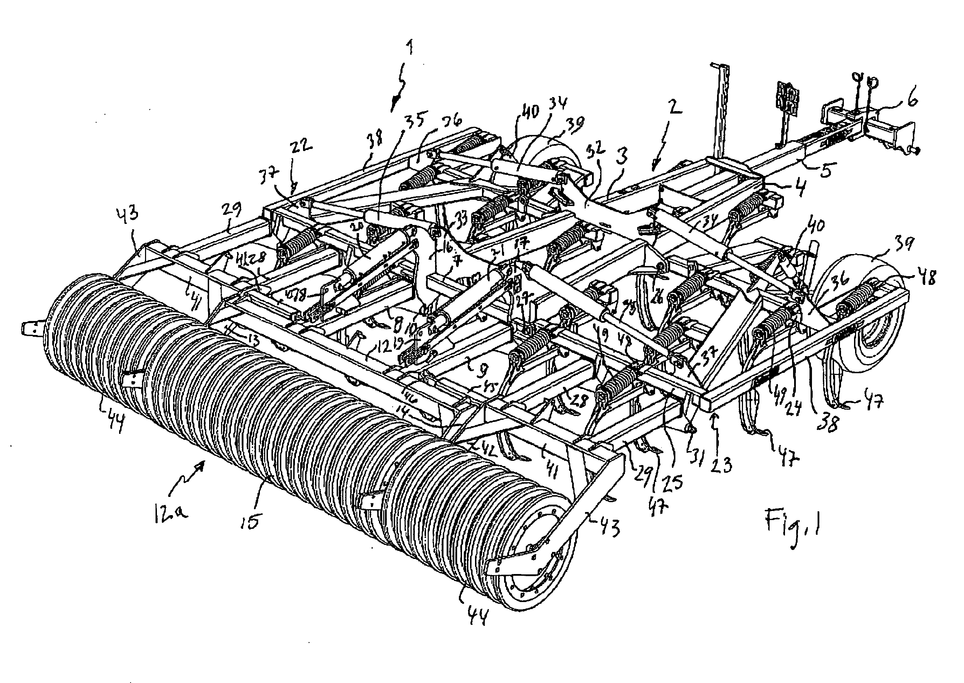

Fig. 1 shows an agricultural machine 1 with a carrying framework 2 consisting generally of two elongated frame beam parts 3 and 4, a fore towbar 5 with a tow coupling 6 and a rear frame beam 7, which connects the frame beams 3 and 4 at their rear ends. Two mainly parallel rear carrying beams 8 and 9 are by means of slew lock arranged pivots 10 and 11, respectively, at their fore ends tumably connected with the frame beam 7 and at their rear ends rigidly connected with an across beam 12, which forms part of a centre section 12a. At the outer ends of the beam 12 are connected arms 13 and 14, on which is freely journalled in bearings a centre wheel aggregate 15 comprising pack wheels, roller rings or the like arranged beside each other. Two slew locks 16 and 17 are fastened at the frame beam 7 and slew locks 18 and 19 are fastened at the rear ends of the rear carrying beams 8 and 9. Between slew locks 16 and 18 and slew locks 17 and 19 are tumably fastened control devices 20 and 21, respectively. Activation of control devices 20 and 21 is adapted to respectively raise or lower the centre wheel aggregate 15 in relation to the framework 2.

On each side of the framework 2 and the centre section 12a, a respective wing section 22 and 23 is arranged. Since both these wing sections are in general identical and move in general identically the righthand wing section 23 shown here in the drawing is described in more detail. The lefthand wing section 22 is provided with the same reference numbers in the description of corresponding details. A fore and rear frame part 24 and 25 is turnably journalled in bearings by means of generally in line with each other arranged pivots 26 and 27. At the rear frame part 25, rearwards extending carrying beams 28 and 29 are journalled in bearings by means of pivots 30 and 31 respectively. Centre slew locks 32 and 33, which are fastened at both elongated frame beams 3 and 4 of the framework, carry at their upper ends one end of control devices 34 and 35 respectively. The opposite ends of control devices 34 and 35 are journalled in bearings in slew locks 36 and 37, which are fastened at the frame parts 24 and 25 respectively. A frame part 38 is connected between the frame parts 24 and 25 to stiffen the wing sections 22 and 23 resp. The frame part 38 extends in front of the frame part 24 and carries a fore wheel 39, which is raisable and lowerable by means of a control device 40. Between the carrying beams 28 and 29 of the wing sections 22 and 23 is fastened an across beam 41, which at its ends carries arms 42 and 43, on which is freely journalled in bearings the wing wheel aggregate 44 comprising pack wheels, roller rings or the like arranged beside each other. The rear carrying beams 8 and 9, which carry the centre wheel aggregate 15, and the outer carrying beams 28 and 29, which carry the wing wheel aggregates 44, are all journalled in bearings at slew locks by means of pivots 10, 11, 30 and 31, which means that six such pivots are in the working position arranged in a row across the driving direction of the agricultural machine.

The beam 41 is hollow and a corresponding hole, preferably quadratic, is excised in the arm 42 so that a telescopic beam 45 can be inserted into said hole through the arm 42 and into the beam 41. The telescopic beam 45 is freely moveable within the beam 41 and is at its opposite end tumably journalled in bearings in a pivot 46, which via a slew lock is fastened at the rear carrying beam 9. The slew lock for the pivot can also be fastened at the rear across beam 12 or at both beams 9 and 12. The pivot 46 can be arranged in a generally vertical plane, which extends through the other pivots 26 and 27 of the wing sections. With the aim of reducing the width of the agricultural machine 1 in the transport position the pivot 46 is suitably arranged within the said vertical plane towards the centre of the agricultural machine.

Cultivator tines 47 are fastened by means of fastenings 48 at the centre section, which carries the centre wheel aggregate 15, and the wing sections 22 and 23, which carry the wing wheel aggregates 44. A spring 49 is adapted to take up strong obstacles in the soil such as stones and the like. The cultivator tines 47 are so distributed along the machine that they essentially create parallel rows with equal spacings between each other. The pack wheels of the centre wheel aggregate 15 and the wing wheel aggregates 44 are generally arranged so that each wheel follows behind a cultivator tine to level the soil after soil tillage by the cultivator tines 47.

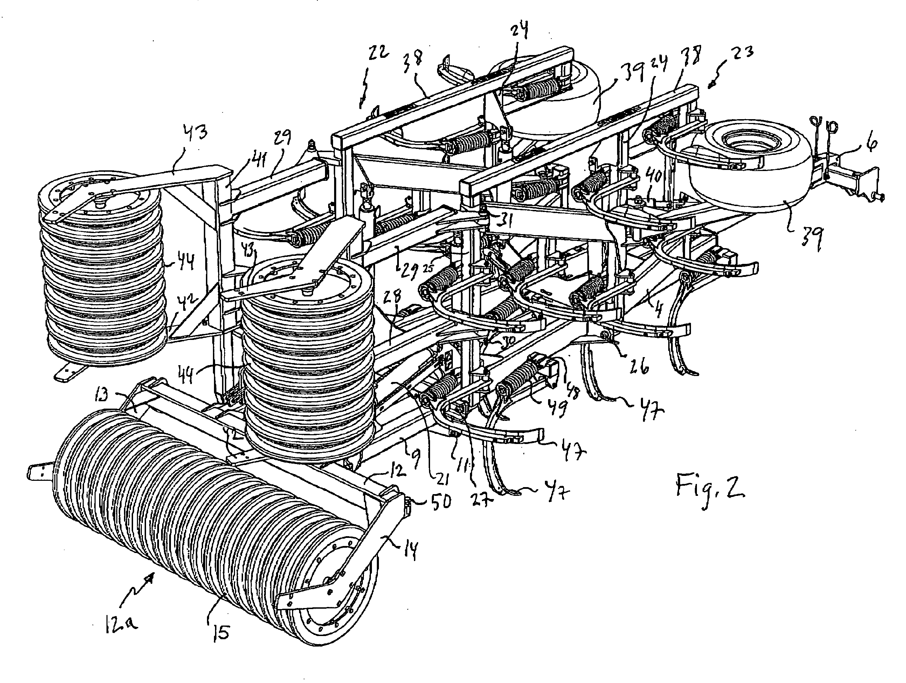

A stop bolt 50 (Fig. 2) is arranged at opposite ends of the across beam 12. The telescopic beam 45 is adapted to abut the stop bolt 50 when the wing sections 22 and 23 are lowered.

Through activation of the control devices 20 and 21 the position of pivot 46 is altered in relation to the other two pivots 26 and 27 of the wing sections, whereby this displacement of the position of the pivot in the upward direction is taken up by the ability of the telescopic beam 45 to move freely within the beam 41. To allow the wheel aggregates 15 and 44 of the centre section 12a and the wing sections 22 and 23 to stand in line with each other in the working position (Fig. 1) the beams of the wing sections in the resting position are so welded together at each other that the outer end of the wing wheel aggregates 44 is positioned below its corresponding inner end. During lowering of a wing section 22 or 23 by means of the control devices 34 and 35 towards level ground the outer ends of the wing wheel aggregates 44 reach the ground first and thereafter the telescopic beam impacts against the stop bolt, which brings about that the centre wheel aggregate 15 and both wing wheel aggregates 44 have their centre axles generally in line with each other. Thereby, the outer wing sections 22 and 23 provide through their oblique construction a tightening of the wing wheel aggregates 44 in the working position.

In the working position the tips of the cultivator tines protrude down below the fore wheels 39 and the rear wheels 15 and 44. During alteration of the cultivation depth the control devices 20 and 21 are activated to raise or lower the wheel aggregates 15 and 44 in relation to the tips of the cultivator tines 47, while control device 40 simultaneously raises or lowers the fore wheels 39 in relation to the tips of the cultivator tines 47, so that all the tips of the cultivator tines 47 essentially acquire the same cultivation depth.

In the transport position, as is shown in Fig. 2, first the rear wheel aggregates 15 and 44 have been pushed downwards by means of control devices 20 and 21, so that the tips of the cultivator tines 47 are disposed above the soil and the fore wheels 39 have been raised up above the ground, whereby the agricultural machine at its fore end is resting on the tow coupling in the draught vehicle. When the wing sections 22 and 23 have been raised up by means of control devices 34 and 35 into the transport position, as is shown in Fig. 2, only the centre wheel aggregate 15 abuts the ground. Through the arrangement of the telescopic beam 45 the wing wheel aggregates 44 on the wing sections 22 and 23 are disposed inside the tips of the cultivator tines 47 in the transport position, which provides an advantage during transport on the road where according to the legislation in different countries maximum transport widths are specified.

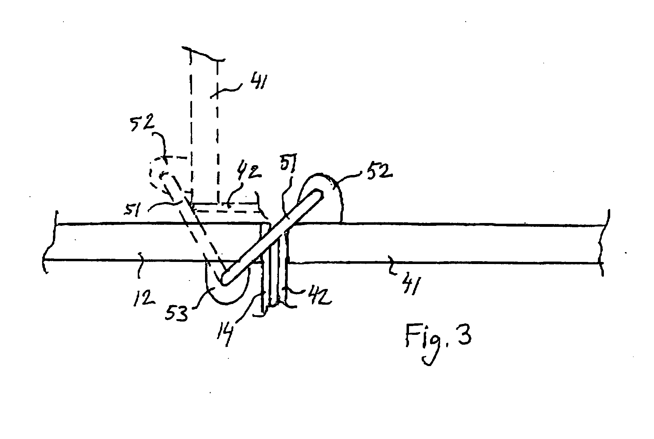

Fig. 3 shows a variant of the agricultural machine, not according to the invention, where instead of a telescopic beam a slewing bracket 51 is journalled in bearings at one of its ends at a slew lock 52 on the outer beam 41 on the wing section 22 or 23 and at its opposite end is journalled in bearings at a slew lock 53 on the across beam 12 on the centre section 12a. The solid lines in the drawing show the working position and the dashed lines show the transport position with wing sections folded up. In this case too, a tightened wing section can be achieved in the transport position through the frame parts on the wing sections being welded at each other so that the outer end of the wheel aggregates 44 is disposed somewhat inside the inner end of these wheels in the transport position. With outer wheels folded up in the transport position the beam 41 is moved slightly inwards, which gives a similar effect as at the first embodiment, i.e. that the wheels are disposed within the tips of the cultivator tines 47 in the transport position.

The control devices described above can comprise hydraulic piston and cylinder units or similar. It should be pointed out that the abovementioned beams in the different embodiments can be as shown quadratic in cross-section, but can also be formed in another appropriate shape.

The agricultural machine according to the invention can naturally be modified further within the framework of the attached claims.

## Claims

1. An agricultural machine (1) with a carrying framework (2), on which a centre section (12a) and on each side thereof folding wing sections (22, 23) are tumably assembled, whereby said centre and wing sections are provided with implements (47), such as cultivator tines or some other soil tillage implement, and carry wheel aggregates (15, 44), such as pack wheels, roller rings or the like, whereby control devices (20, 21) are arranged to raise and lower the wheel aggregates for adjustment of the working depth of said implements, said control devices (20, 21) are adapted to only raise or lower the wheel aggregate (15) of the centre section (12a) and means (45, 51) are arranged on the wing sections (22, 23) to take up the movement of the centre section (12a) in the upward direction, **characterised in that** said centre and wing sections carry said wheel aggregates (15, 44) at their rear edges and **in that** said means comprise a telescopic beam (45), one end of which is freely inserted in a first, rear beam (41), which via arms (42, 43) carries the wing wheel aggregate (44) and which is arranged in general across the driving direction, and the other end of which has a jointed connection at a second, rear beam (9, 12), which via arms (13, 14) carries the centre wheel aggregate (15).

2. Machine according to Claim 1, **characterised in that** the inner end of the telescopic beam (45) has a jointed connection at a point (46), which is arranged at a distance from the outer end of the second rear beam (12) and which lies either generally in the same vertical plane as other points of rotation (26, 27) for said wing sections (22, 23), or inside said vertical plane.

3. Machine according to Claim 1 or 2, **characterised in that** a stop bolt (50) is arranged on the rear beam (12) of the centre section (12a) at its outer end, so that when the telescopic beam (45) comes to abut against the stop bolt the wheel aggregate (15) of the centre section (12a) is in line with the wheel aggregates (44) of the wing sections (42, 43).

4. Machine according to any one of Claims 1-3, **characterised in that** the framework of the wing sections (22, 23) is so fashioned that the centre axle of the wing section wheel aggregate (44) is brought essentially in line with the centre axle of the wheel aggregates (15) of the centre section (12a).

5. Machine according to Claim 4, **characterised in that** the framework beams (24, 25, 38) of said wing sections (22, 23) are obliquely combined at each other so that the outer end of the wing wheel aggregate (44) in the working position is disposed below its opposing inner end, which creates a tightening of the wing wheel aggregate (44) in the working position.

6. Machine according to Claim 5, **characterised in that** a stop bolt (50) is arranged at each of the outer ends of the rear carrying beam (12) on the centre section (12a) with the aim of accepting the inner end of the outer carrying beam (41) on each wing section or a protruding part (45) of the carrying beam.

7. Machine according to Claim 6, **characterised in that** said protruding part is comprised of a telescopic beam (45), which is inserted into the carrying beam (41) of the wing section (22, 23) and at its other end is tumably connected with the carrying beam (12) of the centre section (12a) a predetermined distance inwards from its end.

## Patentansprüche

1. Landwirtschaftliche Maschine (1) mit einem tragenden Rahmen (2), an welchem ein zentraler Abschnitt (12a) und an jeder Seite davon Faltflügelabschnitte (22, 23) drehbar montiert sind, wobei der zentrale Abschnitt und die Flügelabschnitte mit Werkzeugen (47), wie etwa Grubberzinken oder einem anderen Bodenbearbeitungswerkzeug, bereitgestellt sind und Radaggregate (15, 44), wie etwa Packräder, Walzringe oder dergleichen, tragen, wobei Regelungs/Steuerungsvorrichtungen (20, 21) angeordnet sind, um die Radaggregate anzuheben und abzusenken, um die Arbeitstiefe der Werkzeuge einzustellen, wobei die Regelungs/Steuerungsvorrichtungen (20, 21) dazu eingerichtet sind, nur das Radaggregat (15) des zentralen Abschnitts (12a) anzuheben oder abzusenken, und wobei Mittel (45, 51) an den Flügelabschnitten (22, 23) angeordnet sind, um die Bewegung des zentralen Abschnitts (12a) in der Aufwärtsrichtung aufzunehmen,
**dadurch gekennzeichnet, dass** der zentrale Abschnitt und die Flügelabschnitte die Radaggregate (15, 44) an ihren hinteren Rändern tragen und, dass die Mittel einen Teleskopträger (45) umfassen, wobei ein Ende davon frei in einen ersten hinteren Träger (41) eingeführt ist, welcher das Flügelradaggregat (44) über Arme (42, 43) trägt und welcher im Allgemeinen quer zur Antriebsrichtung angeordnet ist und, wobei das andere Ende davon eine Gelenkverbindung an einem zweiten hinteren Träger (9, 12) aufweist, welcher das zentrale Radaggregat (15) über Arme (13, 14) trägt.

2. Maschine nach Anspruch 1, **dadurch gekennzeichnet, dass** das innere Ende des Teleskopträgers (45) eine Gelenkverbindung an einem Punkt (46) aufweist, welcher in einem Abstand von dem äußeren Ende des zweiten hinteren Trägers (12) angeordnet ist und welcher entweder im Allgemeinen in derselben vertikalen Ebene wie andere Drehpunkte (26, 27) für die Flügelabschnitte (22, 23) oder innerhalb der vertikalen Ebene liegt.

3. Maschine nach Anspruch 1 oder 2, **dadurch gekennzeichnet, dass** ein Stopperbolzen (50) an dem hinteren Träger (12) des zentralen Abschnitts (12a) an dessen äußeren Ende angeordnet ist, so dass sich das Radaggregat (15) des zentralen Abschnitts (12a) in einer Linie mit den Radaggregaten (44) der Flügelabschnitte (42, 43) befindet, wenn der Teleskopträger (45) mit dem Stopperbolzen in Anlage tritt.

4. Maschine nach einem der Ansprüche 1 bis 3, **dadurch gekennzeichnet, dass** der Rahmen der Flügelabschnitte (22, 23) derart ausgebildet ist, dass die zentrale Achse des Flügelabschnittsradaggregats (44) im Wesentlichen in eine Linie mit der zentralen Achse der Radaggregate (15) des zentralen Abschnitts (12a) gebracht wird.

5. Maschine nach Anspruch 4, **dadurch gekennzeichnet, dass** die Rahmenträger (24, 25, 38) der Flügelabschnitte (22, 23) miteinander geneigt verbunden sind, so dass das äußere Ende des Flügelradaggregats (44) in der Arbeitsposition unter seinem gegenüberliegenden inneren Ende angeordnet ist, was eine Verfestigung des Flügelradaggregats (44) in der Arbeitsposition erzeugt.

6. Maschine nach Anspruch 5, **dadurch gekennzeichnet, dass** ein Stopperbolzen (50) an jedem der äußeren Enden des hinteren tragenden Trägers (12) an dem zentralen Abschnitt (12a) mit dem Ziel angeordnet ist, das innere Ende des äußeren tragenden Trägers (41) an jedem Flügelabschnitt oder einen vorstehenden Teil (45) des tragenden Trägers anzunehmen.

7. Maschine nach Anspruch 6, **dadurch gekennzeichnet, dass** der vorstehende Teil einen Teleskopträger (45) umfasst, welcher in den tragenden Träger (41) des Flügelabschnitts (22, 23) eingeführt ist und an seinem anderen Ende drehbar mit dem tragenden Träger (12) des zentralen Abschnitts (12a) in einem bestimmten Abstand einwärts von seinem Ende verbunden ist.

## Revendications

1. Machine agricole (1) avec un cadre porteur (2), sur lequel une portion centrale (12a) et, de chaque côté de celle-ci, des portions latérales repliables (22, 23) sont montées pivotantes, lesdites portions centrales et latérales étant équipées d'outils (47), tels que des herses agricoles ou autres types d'outils de labourage du sol, et portant des ensembles de roues (15, 44), telles que des roues jumelées, des roues de roulage ou similaires, des dispositifs de commande (20, 21) étant agencés pour soulever et abaisser les ensembles de roues pour le réglage de la profondeur de travail desdits outils, lesdits dispositifs de commande (20, 21) étant adaptés pour soulever ou abaisser seulement l'ensemble de roues (15) de la portion centrale (12a) et des moyens (45, 51) étant agencés sur les portions latérales (22, 23) pour permettre le mouvement de la portion centrale (12a) vers le haut, **caractérisé en ce que** lesdites portions centrales et latérales portent les ensembles de roues (15, 44) au niveau de leurs bords arrière et **en ce que** lesdits moyens comprennent une poutre télescopique (45), dont une extrémité est insérée librement dans une première poutre arrière (41), laquelle, par l'intermédiaire de bras (42, 43), supporte l'ensemble de roues (44) latéral et est disposée de façon générale transversalement à la direction de déplacement, et dont l'autre extrémité comporte une liaison articulée à une deuxième poutre arrière (9, 12), laquelle, par l'intermédiaire de bras (13, 14), supporte l'ensemble de roues (15) central.

2. Machine suivant la revendication 1, **caractérisée en ce que** l'extrémité intérieure de la poutre télescopique (45) comporte une liaison articulée à un point (46), qui est disposé à une distance de l'extrémité externe de la deuxième poutre arrière (12) et qui se trouve soit généralement dans le même plan vertical que les autres points de rotation (26, 27) pour lesdites portions latérales repliables (22, 23), soit à l'intérieur dudit plan vertical.

3. Machine suivant la revendication 1 ou 2, **caractérisée en ce qu'**une vis de blocage (50) est disposée sur la poutre arrière (12) de la portion centrale (12a) à son extrémité externe, de sorte que, lorsque la poutre télescopique (45) vient en butée contre le boulon d'arrêt, l'ensemble de roues (15) de la portion centrale (12a) est en ligne avec les ensembles de roues (44) des portions latérales repliables (42, 43).

4. Machine selon l'une quelconque des revendications 1 à 3 **caractérisée en ce que** la structure des portions latérales repliables (22, 23) est façonnée de sorte que l'axe central de l'ensemble de roues de la portion latérale (44) est amené sensiblement en ligne avec l'axe central des ensembles de roue (15) de la portion centrale (12a).

5. Machine selon la revendication 4, **caractérisée en ce que** les faisceaux de cadres (24, 25, 38) desdites portions latérales repliables (22, 23) sont combinées en oblique à l'autre de manière que l'extrémité extérieure de l'ensemble de roues latérales (44) dans la position de travail est disposée au-dessous de son extrémité intérieure opposée, ce qui crée un serrage de l'ensemble de roues latérales (44) dans la position de travail.

6. Machine selon la revendication 5, **caractérisée en ce qu'**un boulon d'arrêt (50) est agencé à chacune des extrémités extérieures de la poutre de transport arrière (12) sur la partie centrale (12A) dans le but d'accepter l'extrémité intérieure de la poutre de transport extérieure (41) sur chaque tronçon latéral ou une partie en saillie (45) de la poutre porteuse.

7. Machine selon la revendication 6, **caractérisée en ce que** ladite partie en saillie comprend une poutre télescopique (45), qui est insérée dans la poutre porteuse (41) de la portion latérale (22, 23) et à son autre extrémité, est reliée de façon rotative avec la poutre porteuse (12) de la portion centrale (12a) à une distance prédéterminée vers l'intérieur à partir de son extrémité.
